# NEUE EUROPÄISCHE PATENTSCHRIFT

(11) **EP 1 182 027 B2**
(45) Veröffentlichungstag und Bekanntmachung des Hinweises auf die Entscheidung über den Einspruch: **22.11.2006**
(45) Hinweis auf die Patenterteilung: 21.05.2003
(21) Anmeldenummer: 00117045.5
(22) Anmeldetag: 09.08.2000
(51) Int. Cl.: B29C 47/08

(54) **Extrudiervorrichtung**
Drive for extrusion apparatus
Mécanisme d'entraînement pour une extrudeuse

(43) Veröffentlichungstag der Anmeldung: 27.02.2002
(73) Patentinhaber: Reifenhäuser GmbH & Co. Maschinenfabrik, 53839 Troisdorf (DE)
(72) Erfinder: Meyer, Helmut, 842 Troisdorf (DE)
(74) Vertreter: Rohmann, Michael

(56) Entgegenhaltungen:
- DE-A- 4 430 176
- DE-A1- 19 807 738
- DE-A1- 19 821 995
- DE-C2- 4 344 335
- DE-T2- 69 703 535
- DE-U- 29 910 332
- PATENT ABSTRACTS OF JAPAN vol. 011, no. 149 (M-588), 15. Mai 1987 (1987-05-15) & JP 61 283524 A (TOYODA GOSEI CO LTD), 13. Dezember 1986 (1986-12-13)
- "Hohe Leistung" aus KUNSTSTOFFE 3/99, Seite 62

## Beschreibung

Die Erfindung betrifft eine Extrudiervorrichtung mit Extruderschnecke und Schneckenantrieb, wobei der Schneckenantrieb aus einem Antriebsgehäuse und einem Antriebsmotor mit Stator und Rotor besteht, wobei die Extruderschnecke eine Schneckenwelle und einen an die Schneckenwelle anschließenden, in das Antriebsgehäuse zumindest teilweise einfassenden Anschlussabschnitt aufweist, wobei in dem Antriebsgehäuse ein zylinderförmiger Stator angeordnet ist, der zumindest einen Teil des Anschlussabschnittes umgibt, wobei der zylinderförmige Stator fernerhin einen zylinderförmigen Rotor umgibt, welcher Rotor seinerzeit zumindest einen Teil des Anschlussabschnittes umgibt undwobei der Rotor ohne Zwischenschaltung eines Getriebes an den Anschlussabschnitt der Extruderschnekke angeschlossen ist. - Eine solche Extrudiervorrichtung dient insbesondere zur Verarbeitung von thermoplastischem Kunststoff.

Eine Extrudiervorrichtung der eingangs genannten Art ist aus DE 44 30 176 A1 bekannt. Bei der diesbezüglichen Ausführungsform sind Rotor und Stator außerhalb des Bereiches der axialen Längserstrekkung des Schneckenstegs der Extruderschnecke angeordnet. Bei dieser Ausführungsform ist ein funktionssicherer und störungsfreier Betrieb nicht immer möglich. Vor allem ist die Abdichtung des Motorraumes gegenüber dem Schneckenraum problematisch. Der bekannte Antriebsmotor zeichnet sich durch mechanische Zwänge aus, die einen reibungslosen Betrieb behindern. - Weiterhin ist eine ähnliche Extrudiervorrichtung bekannt (Patent Abstract of Japan vol. 011, no. 149 (M-588), 15. Mai 1987 & JP 61283524 A / Toyoda Gosei Co. Ltd., 13.12.1986), die aber analoge Nachteile wie die vorstehend beschriebene Extrudiervorrichtung aufweist.

Weiterhin sind aus der Praxis Extrudiervorrichtungen bekannt, bei denen am hinteren Bereich der Extruderschnecke zunächst ein mechanisches Untersetzungsgetriebe angeschlossen ist. An dieses Getriebe schließt wiederum der als Elektromotor ausgebildete Antriebsmotor an. Diese bekannte Extrudiervorrichtung zeichnet sich durch einen komplexen und voluminösen Aufbau aus. Dies gilt vor allem, wenn eine Koextrusion mit mehreren Extrudern verwirklicht wird. Aufgrund der Zwischenschaltung des mechanischen Getriebes ist der Betrieb der bekannten Extrudiervorrichtung mit einer nachteilhaften Geräuschentwicklung verbunden. Abgesehen von der komplexen und voluminösen Bauweise dieser Extrudiervorrichtung ist auch eine verhältnismäßig aufwendige Steuerung und Regelung der Vorrichtung erforderlich.

Demgegenüber liegt der Erfindung das technische Problem zugrunde, eine Extrudiervorrichtung anzugeben, die sich durch Einfachheit und durch ein geringes Volumen auszeichnet und die andererseits sehr funktionssicher und störungsfrei betrieben werden kann.

Zur Lösung dieses technischen Problems lehrt die Erfindung eine Extrudiervorrichtung mit Extruderschnecke und Schneckenantrieb nach Anspruch 1.

Vorteilhafte Weiterbildungen der Erfindung sind Gegenstand der abhängigen Ansprüche.

Der als Elektromotor ausgeführte Antriebsmotor weist ein hohes Drehmoment bzw. hohes Antriebsmoment bei verhältnismäßig geringer Motordrehzahl auf. Der zylinderförmige Stator und der zylinderförmige Rotor des Antriebsmotors haben zweckmäßigerweise zueinander parallele Zylindermantelflächen. Mit anderen Worten ist also der Rotor gleichsam zentriert in den von dem Stator ringförmig umgebenen Zwischenraum eingesetzt. Eine Wasserkühlung kann für den Stator vorgesehen sein. Dazu kann der Stator entsprechende Wasserkühlungskanäle aufweisen.

Der Anschlussabschnitt kann eine geradlinige Verlängerung der Schneckenwelle der Extruderschnekke bilden. Der Anschltissabschnitt ist zweckmäßigerweise zentralmittig in den von dem Rotor bzw. von dem Stator ringförmig umgebenen Zwischenraum eingesetzt. Vorzugsweise wird der Anschlussabschnitt der Extruderschnecke vollständig von dem Antriebsgehäuse umgeben.

Der Rotor ist über zumindest ein Verbindungselement mit der Anschlusshülse verbunden Dass der Anschlussabschnitt drehfest in der Anschlusshülse gehalten wird, meint im Rahmen der Erfindung, dass Anschlussabschnitt und Anschlusshülse nicht relativ zueinander verdrehbar sind. Vorzugsweise ist der Anschlussabschnitt der Extruderschnecke zylinderförmig ausgebildet und weist dieser zylinderförmige Anschlussabschnitt über den Zylindermantel und parallel zur Zylinderachse verlaufende Rippen auf, welche Rippen in komplementäre Nuten der Anschlusshülse einfassen. Die Rippen sind dabei zweckmäßigerweise gleichmäßig über den Umfang des zylinderförmigen Anschlussabschnittes verteilt. Durch das Einfassen der Federn in die komplementären Nuten der Anschlusshülse wird eine drehfeste Verbindung von Anschlussabschnitt und Anschlusshülse sichergestellt.

Zweckmäßigerweise ist der Rotor über zumindest ein an derschneckenwellenabgewandten Rückseite des Antriebsgehäuses angeordnetes Verbindungselement mit dem Anschlussabschnitt und/oder mit der Anschlusshülse verbunden. Vorzugsweise ist der Rotor nur über ein einziges Verbindungselement unmittelbar mit dem Anschlussabschnitt und/oder unmittelbar mit der Anschlusshülse verbunden. Das Verbindungselement ist dabei zweckmäßigerweise mit Schrauben und/ oder Bolzen an dem Rotor einerseits und an dem Anschlussabschnitt und/oder an der Anschlusshülse andererseits befestigt. Nach sehr bevorzugter Ausführungsform der Erfindung ist der zylinderförmige Rotor über einen kreisförmigen Verbindungsring oder über eine kreisförmige Verbindungsplatte mit dem Anschlussabschnitt und/oder mit der Anschlusshülse verbunden. Der Verbindungsring oder die Verbindungsplatte ist dabei vorzugsweise einerseits an dem rückseitigen Zylinderstirnende des Rotors befestigt und andererseits an dem rückseitigen Stirnende des Anschlussabschnitts und/oder dem rückseitigen Stirnende der Anschlusshülse befestigt. Die Befestigung erfolgt zweckmäßigerweise mit Hilfe von Schrauben und/oder Bolzen.

Es liegt im Rahmen der Erfindung, dass zwischen dem Rotor und der Anschlusshülse das drehfeste Gehäuseteil des Antriebsgehäuses angeordnet ist und sowohl der Rotor als auch die Anschlusshülse stützen sich bei einer Rotation über Wälzlager an dem drehfesten Gehäuseteil ab. Drehfestes Gehäuseteil meint im Rahmen der Erfindung, dass dieses Gehäuseteil nicht an der Rotation des Rotors bzw. an der Rotation des Anschlussabschnitts teilnimmt.

Nach sehr bevorzugter Ausführungsform, der im Rahmen der Erfindung ganz besondere Bedeutung zukommt, ist an der Rückseite des Antriebsgehäuses ein vor dem rückseitigen Stirnende des Anschlussabschnittes angeordneter Verschlussdeckel vorgesehen und ist nach Entfernen des Verschlussdeckels die Extruderschnecke aus der Rückseite des Antriebsgehäuses herausziehbar. Aufgrund dieser erfindungsgemäßen Ausgestaltung ist eine besonders einfache Wartung, Instandhaltung und Reinigung der Extrudiervorrichtung möglich. - Nach sehrbevorzugterAusführungsform der Erfindung ist fernerhin an der Rückseite des Antriebsgehäuses ein vor dem rückseitigen Zylinderstirnende des Stators angeordneter Verschlussring vorgesehen und ist nach Entfernen dieses Verschlussringes der Stator aus der Rückseite des Antriebsgehäuses herausziehbar. Auch diese Ausführungsform zeichnet sich durch eine besonders einfache Wartung, Instandhaltung und Reinigung der Extrudiervorrichtung aus.

Der Erfindung liegt die Erkenntnis zugrunde, dass eine besonders einfache und wenig raumaufwendige Extrudiervorrichtung verwirklicht werden kann, wenn die Extruderschnecke ohne Zwischenschaltung eines Getriebes unmittelbar von einem Antriebsmotor angetrieben wird und dabei die Ausgestaltung so gewählt wird, wie es im Patentanspruch 1 beansprucht ist. Bei einer Drehung des Rotors des Antriebsmotors wird durch Verbindung des Rotors mit dem Anschlussabschnitt dieser Anschlussabschnitt bzw. die Extruderschnecke unmittelbar in eine entsprechende Drehung versetzt. Die Drehzahl des Rotors entspricht dabei exakt der Drehzahl der Extruderschnecke. Die erfindungsgemäße Extrudiervorrichtung zeichnet sich zunächst durch eine verhältnismäßig einfache Steuerung und Regelung aus. Durch die erfindungsgemäße Bauweise kann die Extrudiervorrichtung im Vergleich zu bekannten Extrudiervorrichtungen in ihrem Volumen und insbesondere in ihrer Länge beachtlich reduziert werden. Dies ist vor allem bei Koextrusionsanordnungen, bei denen mit einer Mehrzahl von Extrudern gearbeitet wird, sehr vorteilhaft. Im Übrigen ist die erfindungsgemäße Extrudiervorrichtung im Vergleich zu den bekannten Extrudiervorrichtungen einfacher zu fertigen bzw. zu montieren. Im Gegensatz zu den bekannten Extrudiervorrichtungen zeichnetsich die erfindungsgemäße Vorrichtung weiterhin durch einen überraschend geräuscharmen Betrieb aus. Durch den Wegfall des mechanischen Getriebes wird insbesondere auch die Anzahl der mechanisch beanspruchten Verschleißteile vermindert. Von daher vereinfacht sich auch die Wartung, Instandhaltung und Reparatur. Von besonderem Vorteil ist fernerhin, dass aufgrund des Wegfalls des mechanischen Getriebes eine aufwendige Schmierung mit Getriebeöl entfällt. Da dieses Getriebeöl ein Gefahrengut darstellt, kann in vorteilhafter Weise auf entsprechende Gefahrenguttransporte verzichtet werden. Im Ergebnis werden beachtliche und überraschende Vorteile mit der Erfindung erzielt.

Nachfolgend wird die Erfindung anhand einer lediglich ein Ausführungsbeispiel darstellenden Zeichnung näher erläutert. Es zeigen in schematischer Darstellung:
- Fig. 1: eine Extrudiervorrichtung nach dem Stand der Technik,
- Fig. 2: eine erfindungsgemäße Extrudiervorrichtung und
- Fig. 3: einen Schnitt A-A durch den Gegenstand nach Fig. 2.

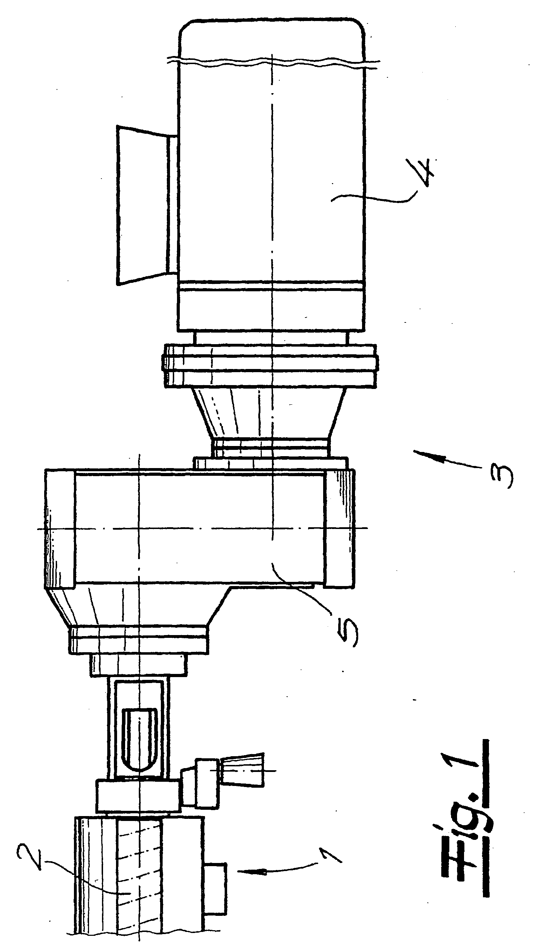

Fig. 1 zeigt eine Extrudiervorrichtung nach dem Stand der Technik, die eine Extruderschnecke 1 mit Schneckenwelle 2 sowie einen Schneckenantrieb 3 aufweist. Der Schneckenantrieb 3 besteht aus einem Antriebsmotor 4 und einem zwischen dem Antriebsmotor 4 und der Schneckenwelle 2 angeordneten mechanischen Untersetzungsgetriebe 5. In Fig. 1 ist erkennbar, dass die aus dem Stand der Technik bekannte Extrudiervorrichtung sehr raumaufwendig ausgeführt ist und insbesondere eine nachteilhafte beachtliche Länge aufweist.

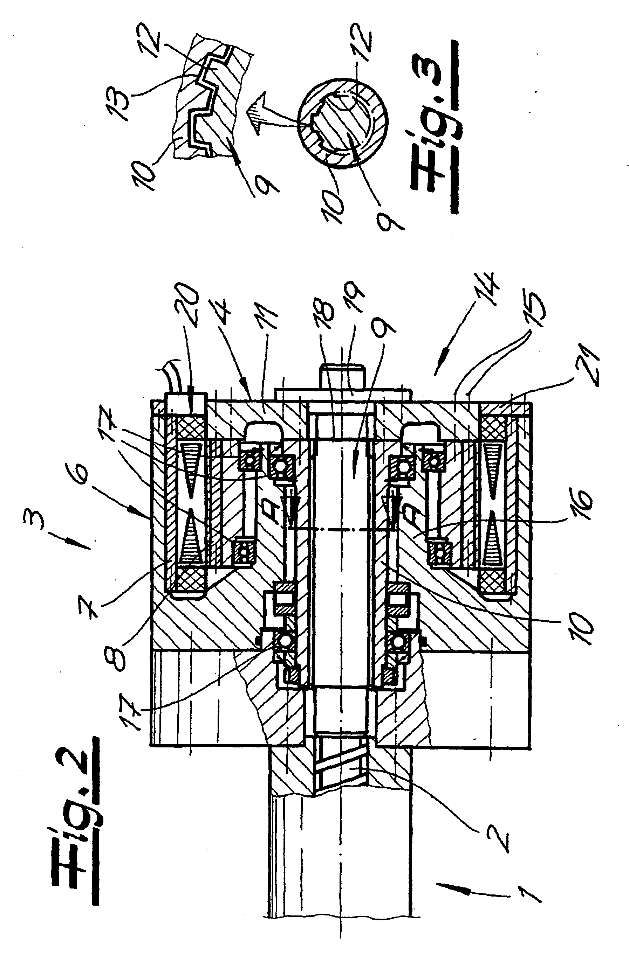

Dagegen zeigt Fig. 2 eine erfindungsgemäße Extrudiervorrichtung, die ebenfalls eine Extruderschnecke 1 und einen Schneckenantrieb 3 aufweist. Der Schneckenantrieb 3 besteht aus einem Antriebsgehäuse 6 und einem Antriebsmotor 4 mit Stator 7 und Rotor 8. Die Extruderschnecke 1 weist eine Schneckenwelle 2 und einen an die Schneckenwelle 2 anschließenden in das Antriebsgehäuse 6 einfassenden Anschlussabschnitt 9 auf. In dem Antriebsgehäuse 6 ist der zylinderförmig ausgebildete Stator 7 angeordnet, der im Ausführungsbeispiel den Anschlussabschnitt 9 umgibt. Der zylinderförmige Stator 7 umgibt fernerhin den zylinderförmig ausgebildeten Rotor 8, welcher Rotor 8 seinerseits den Anschlussabschnitt 9 der Extruderschnecke 1 umgibt. Der Stator 7 und Rotor 8 weisen parallele Zylindermantelflächen auf. Mit anderen Worten ist der Rotor 8 gleichsam zentriert in den von dem Stator 7 ringförmig umgebenen Zwischenraum eingesetzt. Fernerhin ist der Anschlussabschnitt 9 der Extruderschnecke 1 zentralmittig in den von dem Rotor 8 bzw. in den von dem Stator 7 ringförmig umgebenen Zwischenraum eingesetzt.

In den Fig. 2 und 3 ist erkennbar, dass der Anschlussabschnitt 9 drehfest in einer Anschlusshülse 10 gehalten ist und der Rotor 8 über ein Verbindungselement 11 mit der Anschlusshülse 10 verbunden ist. Vorzugsweise und im Ausführungsbeispiel nach den Fig. 2 und 3 ist der Anschlussabschnitt 9 zylinderförmig ausgebildet. Der Anschlussabschnitt 9 weist dabei über den Zylindermantel und parallel zur Zylinderachse verlaufende Federn 12 auf, welche Federn 12 in komplementäre Nuten 13 der Anschlusshülse 10 einfassen (Fig. 3).

Wie oben bereits erwähnt, ist der Rotor 8 vorzugsweise über ein an der schneckenwellenabgewandten Rückseite 14 des Antriebsgehäuses 6 angeordnetes Verbindungselement 11 mit der Anschlusshülse 10 verbunden. Der Rotor 8 ist also erfindungsgemäß ohne Zwischenschaltung eines Getriebes an den Anschlussabschnitt 9 der Extruderschnecke 1 bzw. an die Anschlusshülse 10 angeschlossen. Vorzugsweise und im Ausführungsbeispiel nach Fig. 2 ist der zylinderförmige Rotor 8 über ein als kreisförmiger Verbindungsring ausgebildetes Verbindungselement 11 mit der Anschlusshülse 10 verbunden. Die Verbindung des kreisförmigen Verbindungsringes mit dem Rotor 8 einerseits und mit der Anschlusshülse 10 andererseits erfolgt dabei mit Hilfe von Bolzen 15. - Bei einer Rotation des Rotors 8 wird die damit verbundene Anschlusshülse 10 bzw. der damit drehfest verbundene Anschlussabschnitt 9 ebenfalls in eine entsprechende Rotation versetzt und auf diese Weise wird mit dem Antriebsmotor 4 die Extruderschnecke 1 ohne Zwischenschaltung eines Getriebes unmittelbar angetrieben.

Vorzugsweise und im Ausführungsbeispiel nach Fig. 2 ist zwischen dem Rotor 8 und der Anschlusshülse 10 ein drehfestes Gehäuseteil 16 des Antriebsgehäuses 6 angeordnet. Sowohl der Rotor 8 als auch die Anschlusshülse 10 stützen sich bei einer Rotation über Wälzlager 17 an dem drehfesten Gehäuseteil 16 ab.

Im Ausführungsbeispiel nach Fig. 2 ist an der Rückseite 14 des Antriebsgehäuses 6 ein vor dem rückseitigen Stirnende 18 des Anschlussabschnittes 9 angeordneter Verschlussdeckel 19 vorgesehen. Nach Entfernen des Verschlussdeckels 19 kann die Extruderschnecke 1 aus dem Antriebsgehäuse 6 herausgezogen werden. Dies ermöglicht eine besonders einfache und wenig aufwendige Wartung, Instandsetzung und Reinigung der Extrudiervorrichtung. Gemäß Fig. 2 ist weiterhin an der Rückseite 14 des Antriebsgehäuses 6 ein vor dem rückseitigen Zylinderstirnende 20 des Stators 7 angeordneter Verschlussring 21 vorgesehen. Nach Entfernen des Verschlussringes 21 ist der Stator 7 auf einfache Weise aus dem Antriebsgehäuse herausziehbar. Auch dies ermöglicht eine einfache Wartung, Instandsetzung und Reinigung.

## Patentansprüche

1. Extrudiervorrichtung mit Extrudierschnecke (1) und Schneckenantrieb (3), wobei der Schneckenantrieb (3) aus einem Antriebsgehäuse (6) und einem Antriebsmotor (4) mit Stator (7) und Rotor (8) besteht, wobei die Extruderschnecke (1) eine Schneckenwelle (2) und einen an die Schneckenwelle (2) anschließenden, in das Antriebsgehäuse (6) zumindest teilweise einfassenden Anschlussabschnitt (9) aufweist, wobei in dem Antriebsgehäuse (6) ein zylinder förmiger Stator (7) angeordnet ist, der zumindest einen Teil des Anschlussabschnittes (9) umgibt, wobei der zylinderförmige Stator (7) fernerhin einen zylinderförmigen Rotor (8) umgibt, welcher Rotor (8) seinerseits zumindest einen Teil des Anschlussabschnittes (9) umgibt und wobei der Rotor (8) ohne Zwischenschaltung eines Getriebes an den Anschlussabschnitt (9) der Extruderschnecke (1) angeschlossen ist, wobei der Anschlussabschnitt (9) drehfest in einer Anschlusshülse (10) gehalten ist, wobei der Rotor (8) über zumindest ein Verbindungselement (11) mit der Anschlusshülse (10) verbunden ist und wobei zwischen dem Rotor (8) und der Anschlusshülse (10) ein drehfestes Gehäuseteil (16) des Antriebsgehäuses (6) angeordnet ist und wobei sowohl der Rotor (8) als auch die Anschlusshülse (10) sich bei einer Rotation über Wälzlager (17) an diesem zwischengeschalteten drehfesten Gehäuseteil (16) abstützen.

2. Extrudiervorrichtung nach Anspruch 1, wobei der Anschlussabschnitt (9) zylinderförmig ausgebildet ist und über den Zylindermantel und parallel zur-Zylinderachse verlaufende Federn (12) aufweist, welche Federn (12) in komplementäre Nuten (13) der Anschlusshülse (10) einfassen.

3. Extrudiervorrichtung nach einem der Ansprüche 1 oder 2, wobei der Rotor (8) über zumindest ein an der schneckenwellenabgewandten Rückseite (14) des Antriebsgehäuses (6) angeordnetes Verbindungselement (11) mit dem Anschlussabschnitt (9) und/oder mit der Anschlusshülse (10) verbunden ist.

4. Extrudiervorrichtung nach einem der Ansprüche 1 bis 3, wobei der zylinderförmige Rotor (8) über einen kreisförmigen Verbindungsring oder über eine kreisförmige Verbindungsplatte mit dem Anschlussabschnitt (9) und/oder mit der Anschlusshülse (10) verbunden ist.

5. Extrudiervorrichtung nach einem der Ansprüche 1 bis 4, wobei an der Rückseite (14) des Antriebsgehäuses (6) ein vor dem rückseitigen Stirnende (18) des Anschlussabschnittes (9) angeordneter Verschlussdeckel (19) vorgesehen ist und wobei nach Entfernen des Verschlussdeckels (19) die Extruderschnecke (1) aus der Rückseite (14) des Antriebsgehäuses (6) herausziehbar ist.

6. Extrudiervorrichtung nach einem der Ansprüche 1 bis 5, wobei an der Rückseite (14) des Antriebsgehäuses (6) ein vor dem rückseitigen Zylinderstirnende (20) des Stators (7) angeordneter Verschlussring (21) vorgesehen ist und wobei nach Entfernen des Verschlussringes (21) der Stator (7) aus der Rückseite (14) des Antriebsgehäuses (6) herausziehbar ist.

## Claims

1. An extrusion apparatus comprising a worm extruder (1) and a worm drive (3), wherein the worm drive (3) consists of a drive housing (6) and of a drive motor (4) comprising a stator (7) and a rotor (8), wherein the worm extruder (1) comprises a worm shaft (2) and a connection section (9) which adjoins the worm shaft (2) and which fits, at least in part, into the drive housing (6), wherein a cylindrical stator (7), which surrounds at least part of the connection section (9), is disposed in the drive housing (6), wherein the cylindrical stator (7) additionally surrounds a cylindrical rotor (8), which rotor (8) in turn surrounds at least part of the connection section (9), and wherein the rotor (8) is attached to the connection section (9) of the worm extruder (1) without the interposition of a transmission, wherein the connection section (9) is held rotationally fixed in a connection sleeve (10), wherein the rotor (8) is attached to the connection sleeve (10) via at least one connection element (11), and wherein a rotationally fixed housing part (16) of the drive housing (6) is disposed between the rotor (8) and the connection sleeve (10), and wherein both the rotor (8) and the connection sleeve (10) are supported via rolling bearings (17) on this interposed fixed housing part (16) when rotation occurs.

2. An extrusion apparatus according to claim 1, wherein the connection section (9) is of cylindrical construction and comprises tongues (12) which extend over its cylindrical curved surface and parallel to the axis of the cylinder, which tongues (12) fit into complementary grooves (13) in the connection sleeve (10).

3. An extrusion apparatus according to either one of claims 1 or 2, wherein the rotor (8) is attached to the connection section (9) and/or to the connection sleeve (10) via at least one connection element (11) which is disposed on the back face (14), which faces away from the worm shaft, of the drive housing (6).

4. An extrusion apparatus according to any one of claims 1 to 3, wherein the cylindrical rotor (8) is attached to the connection section (9) and/or to the connection sleeve (10) via a circular connection ring or via a circular connection plate.

5. An extrusion apparatus according to any one of claims 1 to 4, wherein a closure cap (19), which is disposed in front of the rear end face (18) of the connection section (9), is provided on the back face (14) of the drive housing (6), and wherein after removing the closure cap (19) the worm extruder (1) can be withdrawn from the back face (14) of the drive housing (6).

6. An extrusion apparatus according to any one of claims 1 to 5, wherein a closure ring (21), which is disposed in front of the rear cylindrical end face (20) of the stator (7), is provided on the back face (14) of the drive housing (6), and wherein after removing the closure ring (21) the stator (7) can be withdrawn from the back face (14) of the drive housing (6).

## Revendications

1. Dispositif d'extrusion avec vis sans fin d'extrudeuse (1) et mécanisme d'entraînement de vis sans fin (3), dans lequel le mécanisme d'entraînement de vis sans fin (3) est constitué d'un carter de mécanisme d'entraînement (6) et d'un moteur d'entraînement (4) avec stator (7) et rotor (8), la vis sans fin d'extrudeuse (1) comportant un arbre de vis sans fin (2) et un tronçon de raccordement (9) se raccordant à l'arbre de vis sans fin (2) et s'engageant au moins partiellement dans le carter de mécanisme d'entraînement (6), dans lequel dans le carter de mécanisme d'entraînement (6) est disposé un stator (7) de forme cylindrique qui entoure au moins une partie du tronçon de raccordement (9), dans lequel le stator (7) de forme cylindrique entoure en outre un rotor (8) de forme cylindrique, lequel rotor (8) entoure de son côté au moins une partie du tronçon de raccordement (9), et dans lequel le rotor (8) est raccordé, sans interposition d'une transmission, au tronçon de raccordement (9) de la vis sans fin d'extrudeuse (1), dans lequel le tronçon de raccordement (9) est maintenu solidairement en rotation dans une douille de raccordement (10), dans lequel le rotor (8) est relié à la douille de raccordement (10), par au moins un élément de liaison (11), dans lequel entre le rotor (8) et la douille de raccordement (10) est disposée une partie de carter (16) bloquée en rotation du mécanisme d'entrainement (6) et dans lequel aussi bien le rotor (8) que la douille de raccordement (10) prennent appui, pendant une rotation, contre la partie de carter (16) bloquée en rotation, par l'intermédiaire de paliers de roulement (17).

2. Dispositif d'extrusion selon la revendication 1, dans lequel le tronçon de raccordement (9) est de forme cylindrique et comporte des ressorts (12) qui s'étendent sur l'enveloppe cylindrique et parallèlement à l'axe du cylindre, lesquels ressorts (12) s'engagent dans des rainures (13) complémentaires de la douille de raccordement (10).

3. Dispositif d'extrusion selon l'une des revendications 1 ou 2, dans lequel le rotor (8) est relié au tronçon de raccordement (9) et/ou à la douille de raccordement (10), par un élément de liaison (11) disposé sur la face arrière (14) tournée à l'opposé de l'arbre de vis sans fin du carter de mécanisme d'entraînement (6).

4. Dispositif d'extrusion selon l'une des revendications 1 à 3, dans lequel le rotor (8) de forme cylindrique est relié au tronçon de raccordement (9) et/ou à la douille de raccordement (10), par un anneau de liaison circulaire ou par une plaque de liaison circulaire.

5. Dispositif d'extrusion selon l'une des revendications 1 à 4, dans lequel sur la face arrière (14) du carter de mécanisme d'entraînement (6), est prévu un couvercle de fermeture (19) disposé devant l'extrémité frontale arrière (18) du tronçon de raccordement (9), et dans lequel, après enlèvement du couvercle de fermeture (19), la vis sans fin d'extrudeuse (1) peut être extraite de la face arrière (14) du carter de mécanisme d'entraînement (6).

6. Dispositif d'extrusion selon l'une des revendications 1 à 5, dans lequel sur la face arrière (14) du carter de mécanisme d'entraînement (6) est prévu un anneau de fermeture (21) disposé devant l'extrémité frontale arrière de cylindre (20) du stator (7) et dans lequel, après enlèvement de l'anneau de fermeture (21), le stator (7) peut être extrait de la face arrière (14) du carter de mécanisme d'entraînement (6).
